(19) Europäisches Patentamt
European Patent Office
Office européen des brevets

(11) **EP 1 180 260 B1**

(12) **FASCICULE DE BREVET EUROPEEN**

(45) Date de publication et mention
de la délivrance du brevet:
**23.05.2007 Bulletin 2007/21**

(51) Int Cl.:
***G07F 7/10*** *(2006.01)*

(21) Numéro de dépôt: **00925433.5**

(22) Date de dépôt: **11.05.2000**

(86) Numéro de dépôt international:
**PCT/FR2000/001269**

(87) Numéro de publication internationale:
**WO 2000/068901 (16.11.2000 Gazette 2000/46)**

(54) **PROCEDE DE CONTRE-MESURE DANS UN COMPOSANT ELECTRONIQUE METTANT EN OEUVRE UN ALGORITHME DE CRYPTOGRAPHIE A CLE SECRETE ET DYNAMIQUE**

GEGENMASSNAHMEVERFAHREN IN EINER GEHEIMEN UND DYNAMISCHEN VERSCHLÜSSELUNGSALGORITHMUS AUFÜHRENDEN ELEKTRONISCHEN SCHALTUNG

COUNTERMEASURE METHOD IN AN ELECTRONIC COMPONENT USING A DYNAMIC SECRET KEY CRYPTOGRAPHIC ALGORITHM

(84) Etats contractants désignés:
**DE ES FR GB IT**

(30) Priorité: **11.05.1999 FR 9906264**

(43) Date de publication de la demande:
**20.02.2002 Bulletin 2002/08**

(73) Titulaire: **GEMPLUS**
**13881 Gémenos Cedex (FR)**

(72) Inventeur: **NACCACHE, David**
**F-75009 Paris (FR)**

(56) Documents cités:
**EP-A- 0 605 996         WO-A-96/07994**
**WO-A-97/30424         WO-A-97/36264**
**DE-A- 4 223 258         FR-A- 2 745 924**
**US-A- 4 932 053**

**Description**

La présente invention concerne un procédé de contre-mesure dans un composant électronique mettant en oeuvre un algorithme de cryptographie à clé secrète. De tels composants sont utilisés dans des applications où l'accès à des services ou à des données est sévèrement contrôlé. Ils ont une architecture formée autour d'un microprocesseur et de mémoires, dont une mémoire programme qui contient la clé secrète.

Ces composants sont notamment utilisés dans les cartes à puce, pour certaines applications de celles-ci. Ce sont par exemple des applications d'accès à certaines banques de données, des applications bancaires, des applications de télé péage, par exemple pour la télévision, la distribution d'essence ou encore le passage de péages d'autoroutes.

Ces composants ou ces cartes mettent donc en oeuvre un algorithme de cryptographie à clé secrète, dont le plus connu est l'algorithme DES (pour Data *Encryption Standard* dans la littérature anglo-saxonne). D'autres algorithmes à clé secrète existent, comme l'algorithme RC5 ou encore l'algorithme COMP128. Cette liste n'est bien sûr pas exhaustive.

De manière générale et succincte, ces algorithmes ont pour fonction de calculer un message chiffré à partir d'un message appliqué en entrée (à la carte) par un système hôte (serveur, distributeur bancaire...) et de la clé secrète contenue dans la carte, et de fournir en retour au système hôte ce message chiffré, ce qui permet par exemple au système hôte d'authentifier le composant ou la carte, d'échanger des données...

Or il est apparu que ces composants ou ces cartes sont vulnérables à des attaques consistant en une analyse différentielle de consommation en courant et qui permettent à des tiers mal intentionnés de trouver la clé secrète. Ces attaques sont appelées attaques DPA , acronyme anglo-saxon pour *Differential Power Analysis.*

Le principe de ces attaques DPA repose sur le fait que la consommation en courant du microprocesseur exécutant des instructions varie selon la donnée manipulée.

Notamment, une instruction du microprocesseur manipulant un bit de donnée génère deux profils de courant différents selon que ce bit vaut "1" ou "0". Typiquement, si l'instruction manipule un "0", on a à cet instant d'exécution une première amplitude du courant consommé et si l'instruction manipule un "1", on a une deuxième amplitude du courant consommé, différente de la première.

Les caractéristiques des algorithmes de cryptographie sont connues : calculs effectués, paramètres utilisés. La seule inconnue est la clé secrète contenue en mémoire programme. Celle-ci ne peut être déduite de la seule connaissance du message appliqué en entrée et du message chiffré fourni en retour.

Cependant, dans un algorithme de cryptographie, certaines données calculées dépendent seulement du message appliqué en clair en entrée de la carte et de la clé secrète contenue dans la carte. D'autres données calculées dans l'algorithme peuvent aussi être recalculées seulement à partir du message chiffré (généralement fourni en clair en sortie de la carte vers le système hôte) et de la clé secrète contenue dans la carte. Plus précisément, chaque bit de ces données particulières peut être déterminé à partir du message d'entrée ou de sortie, et d'un nombre limité de bits particuliers de la clé.

Ainsi, à chaque bit d'une donnée particulière, correspond une sous-clé formée par un groupe particulier de bits de la clé.

Les bits de ces données particulières qui peuvent être prédites sont appelés dans la suite, bits cibles.

L'idée de base de l'attaque DPA est ainsi d'utiliser la différence du profil de consommation en courant d'une instruction selon qu'elle manipule un "1" ou un "0" et la possibilité de calculer un bit cible par les instructions de l'algorithme à partir d'un message connu d'entrée ou de sortie et d'une hypothèse sur la sous-clé correspondante.

Le principe de l'attaque DPA est donc de tester une hypothèse de sous-clé donnée, en appliquant sur un grand nombre de courbes de mesure en courant, chacune relative à un message d'entrée connu de l'attaquant, une fonction booléenne de sélection, fonction de l'hypothèse de sous-clé, et définie pour chaque courbe par la valeur prédite pour un bit cible.

En faisant une hypothèse sur la sous-clé concernée, on est en effet capable de prédire la valeur "0" ou "1" que va prendre ce bit cible pour un message d'entrée ou de sortie donnée.

On peut alors appliquer comme fonction booléenne de sélection, la valeur prédite "0" ou "1" par le bit cible pour l'hypothèse de sous-clé considérée, pour trier ces courbes en deux paquets : un premier paquet regroupe les courbes qui ont vu la manipulation du bit cible à "0" et un deuxième paquet regroupe les courbes qui ont vu la manipulation du bit cible à "1" selon l'hypothèse de sous-clé. En faisant la moyenne de consommation en courant dans chaque paquet, on obtient une courbe de consommation moyenne M0(t) pour le premier paquet et une courbe de consommation moyenne M1(t) pour le deuxième paquet.

Si l'hypothèse de sous-clé est juste, le premier paquet regroupe réellement toutes les courbes parmi les N courbes qui ont vu la manipulation du bit cible à "0" et le deuxième paquet regroupe réellement toutes les courbes parmi les N courbes qui ont vu la manipulation du bit cible à "1". La courbe moyenne de consommation M0(t) du premier paquet aura alors une consommation moyenne partout sauf aux moments de l'exécution des instructions critiques, avec un profil de consommation en courant caractéristique de la manipulation du bit cible à "0" (profil$_0$). En d'autres termes, pour toutes ces courbes tous les bits manipulés ont eu autant de chances de valoir "0" que de valoir "1", sauf le bit cible qui a toujours eu la valeur "0". Ce qui peut s'écrire :

$$MO(t) = [(profil_0 + profil_1)/2]_{t \neq tci} + [profil_0]_{tci}$$

soit

$$MO(t) = [Vm_t]_{t \neq tci} + [profil_0]_{tci}$$

où tci représente les instants critiques, auxquels une instruction critique a été exécutée.

De même, la courbe moyenne de consommation M1(t) du deuxième paquet correspond à une consommation moyenne partout sauf aux moments de l'exécution des instructions critiques, avec un profil de consommation en courant caractéristique de la manipulation du bit cible à "1" ($profil_1$). On peut écrire :

$$M1(t) = [(profil_0 + profil_1)/2]_{t \neq tci} + [profil_1]_{tci}$$

soit

$$M1(t) = [Vm_t]_{t \neq tci} + [profil_1]_{tci}$$

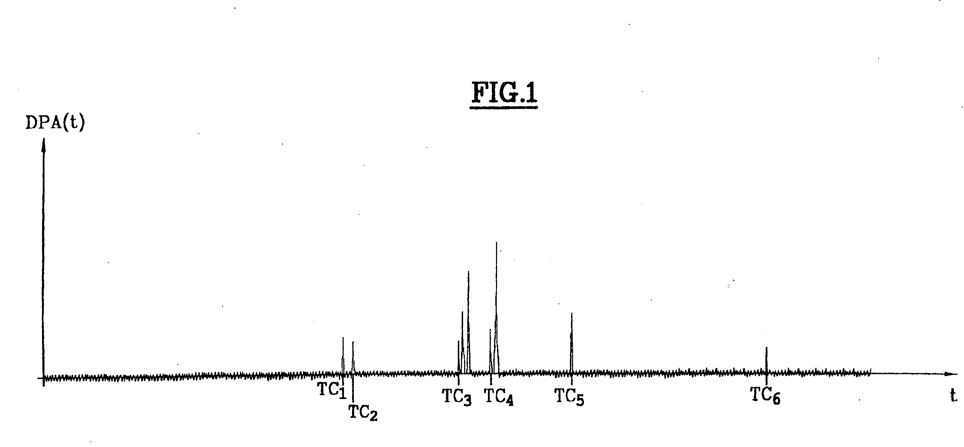

On a vu que les deux profils $profil_0$ et $profil_1$ ne sont pas égaux. La différence des courbes M0(t) et M1(t) donne alors un signal DPA(t) dont l'amplitude est égale à $profil_0 - profil_1$ aux instants critiques tci d'exécution des instructions critiques manipulant ce bit, c'est à dire, dans l'exemple représenté sur la figure 1, aux endroits tc0 à tc6 et dont l'amplitude est à peu près égale à zéro en dehors des instants critiques.

Si l'hypothèse de sous-clé est fausse, le tri ne correspond pas à la réalité. Statistiquement, il y a alors dans chaque paquet, autant de courbes ayant vu réellement la manipulation du bit cible à "0" que de courbes ayant vu la manipulation du bit cible à "1". La courbe moyenne résultante M0(t) se situe alors autour d'une valeur moyenne donnée par $(profil_0 + profil_1)/2 = Vm$, car pour chacune des courbes, tous les bits manipulés, y compris le bit cible ont autant de chances de valoir "0" que de valoir "1".

Le même raisonnement sur le deuxième paquet conduit à une courbe moyenne de consommation en courant M1(t) dont l'amplitude se situe autour d'une valeur moyenne donnée par $(profil_0 + profil_1)/2 = Vm$.

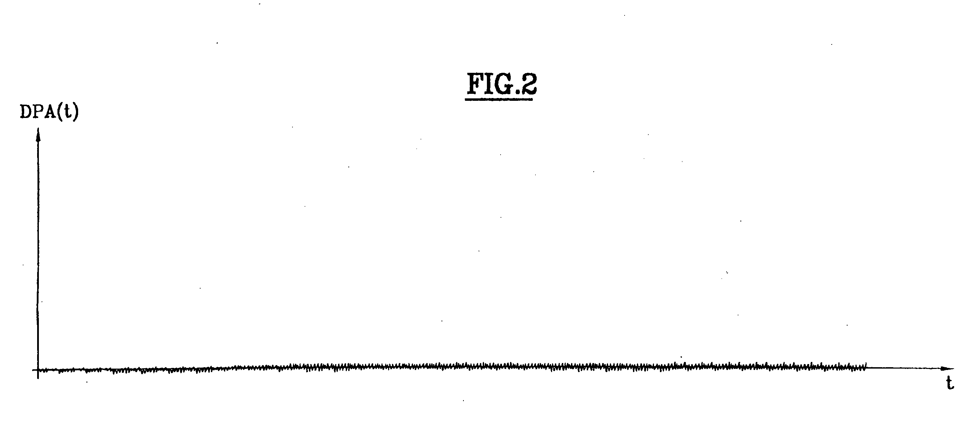

Le signal DPA(t) fourni par la différence M0(t)-M1(t) est dans ce cas sensiblement égal à zéro. Le signal DPA(t) dans le cas d'une hypothèse de sous-clé fausse est représenté sur la figure 2.

Ainsi l'attaque DPA exploite la différence du profil de consommation en courant pendant l'exécution d'une instruction suivant la valeur du bit manipulé, pour effectuer un tri de courbes de consommation en courant selon une fonction de sélection booléenne pour une hypothèse de sous-clé donnée. En effectuant une analyse différentielle de la consommation moyenne en courant entre les deux paquets de courbes obtenus, on obtient un signal d'information DPA(t).

Le déroulement d'une attaque DPA consiste alors globalement :

a - à tirer N messages aléatoires (par exemple N égal 1000) ;

b - à faire exécuter l'algorithme par la carte pour chacun des N messages aléatoires, en relevant la courbe de consommation en courant à chaque fois (mesurée sur la borne d'alimentation du composant) ;

c - à faire une hypothèse sur une sous-clé ;

d - à prédire, pour chacun des messages aléatoires, la valeur prise par un des bits cibles dont la valeur ne dépend que des bits du message (d'entrée ou de sortie) et de la sous-clé prise en hypothèse, pour obtenir la fonction de sélection booléenne ;

e - à trier les courbes selon cette fonction de sélection booléenne (c'est à dire selon la valeur "0" ou "1" prédite pour ce bit cible pour chaque courbe sous l'hypothèse de sous-clé) ;

f - à calculer dans chaque paquet la courbe résultante de consommation moyenne en courant ;

g - à effectuer la différence de ces courbes moyennes , pour obtenir le signal DPA(t).

Si l'hypothèse sur la sous-clé est juste, la fonction de sélection booléenne est juste et les courbes du premier paquet correspondent réellement aux courbes pour lesquelles le message appliqué en entrée ou en sortie a donné un bit cible à "0" dans la carte et les courbes du deuxième paquet correspondent réellement aux courbes pour lesquelles le message appliqué en entrée ou en sortie a donné un bit cible à "1" dans la carte.

On est dans le cas de la figure 1 : le signal DPA(t) n'est donc pas nul aux instants tc0 à tc6 correspondant à l'exécution des instructions critiques (celles qui manipulent le bit cible). Il suffit qu'il y ait au moins un instant critique dans la période d'acquisition.

On notera que l'attaquant n'a pas besoin de connaître avec précision les instants critiques.

Si l'hypothèse de sous-clé n'est pas juste, le tri ne correspond pas à la réalité et on a alors dans chaque paquet autant de courbes correspondant en réalité à un bit cible à "0" que de courbes correspondant à un bit cible à "1". Le signal DPA(t) est sensiblement nul partout (cas représenté à la figure 2). Il faut retourner à l'étape c- et faire une nouvelle hypothèse sur la sous-clé.

Si l'hypothèse s'avère juste, on peut passer à l'évaluation d'autres sous-clés, jusqu'à avoir reconstitué la clé au maximum. Par exemple, avec un algorithme DES, on utilise une clé de 64 bits, dont seulement 56 bits utiles. Avec une attaque DPA, on est capable de reconstituer au moins 48 bits des 56 bits utiles.

La présente invention a pour but de mettre en oeuvre dans un composant électronique, un procédé de contre-mesure qui ne permet pas à l'attaquant de générer le signal DPA(t). Ceci est obtenu en faisant varier la clé de manière dynamique.

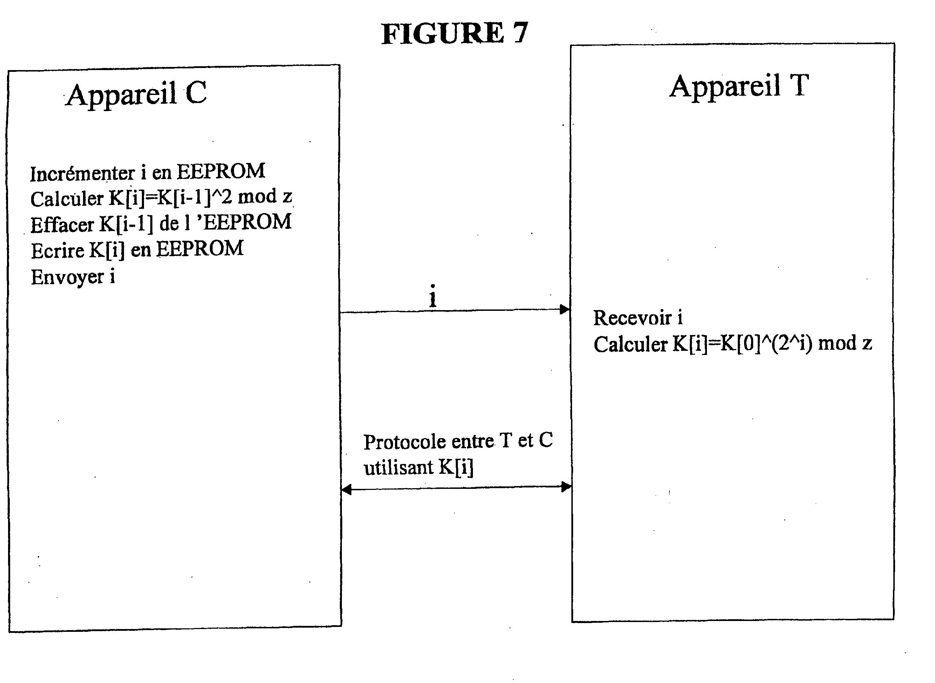

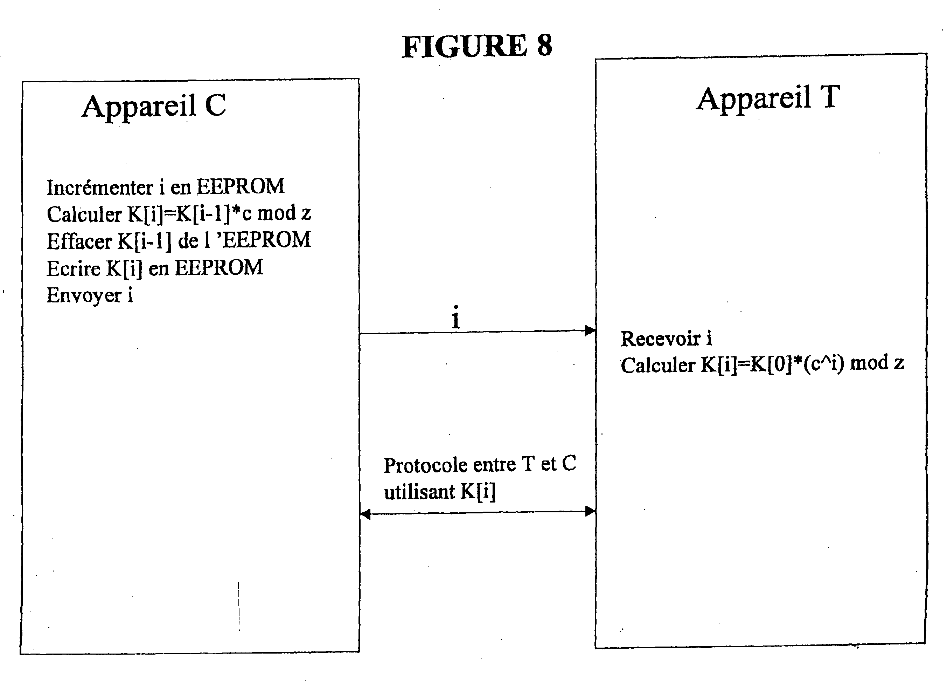

La présente invention suppose le partage d'un secret commun entre deux composants électroniques communicant l'un avec l'autre. Ces composants seront par la suite désignés sur les figures 7 et 8 par les références C (une carte) et T (un terminal) mais peuvent prendre diverses autres formes évidentes à l'homme de l'art. Parmi ces deux composants. C est supposé être potentiellement exposé à la DPA. Par la contre-mesure inventive, le composant électronique C ce trouve paré contre les attaques DPA.

Il est connu notamment du document WO-A-97 32 264, un procédé dans lequel la valeur courante de la clé varie de manière dynamique dans un composant électronique. Ce type de procédé impose que les deux composants électroniques partageant la clé secrète réalisent de manière synchrone des opérations de calculs identiques. Une telle solution n'est pas adaptée à des architectures décentralisées où une pluralité de cartes à puces par exemple coopèrent avec une pluralité de terminaux. Les terminaux et cartes ne peuvent rester synchronisées par définition dans de tels systèmes. En outre la sécurité de la clé utilisée avec de tels procèdes n'est pas optimale. Les terminaux mémorisent dans une mémoire reprogrammable la valeur du nombre de demandes d'authentifications ainsi que la valeur précédente de la clé. L'utilisation de mémoire reprogrammable est onéreuse et permet par malveillance d'en modifier le contenu. L'utilisation de cartes frauduleuses pourrait ainsi est admise par un terminal dont la mémoire a été altérée. L'invention permet de résoudre les inconvénients cités précédemment.

Selon l'invention, le procédé de contre-mesure permet à T et à C de calculer de manière synchronisée une clé de session inconnue du monde extérieur et d'utiliser cette clé dans un protocole cryptographique de chiffrement, authentification, MAC ou toute autre fonction cryptographique nécessitant un algorithme à clé secrète.

Afin de minimiser l'exposition de la donnée secrète partagée entre C et T, cette donnée secrète ne sera exposée qu'indirectement et évoluera dans le temps, la clé utilisée à la session i étant fonction de la clé de la session précédente (utilisée à la session i-1).

Chaque clé de session, notée K[i], sera manipulée au plus deux fois :

- lors de sa création à partir de la clé $k_{i-1}$ ;
- lors de son utilisation dans l'application.

Dans l'invention, on s'intéressera à un algorithme du type DES. Cet algorithme DES comprend seize tours de calcul identiques ; dans cet algorithme il a été mis en évidence que les données prédictibles par un attaquant se situent au premier tour et au dernier tour et que les instructions critiques au sens de l'attaque DPA se situent dans les trois premiers tours et les trois derniers tours.

Un but de l'invention est donc de rendre invisible les données manipulées par les instructions critiques en veillant à ce que ces données soient changées d'une application à l'autre de l'algorithme.

Telle que caractérisée, l'invention concerne donc un procédé de contre-mesure dans un composant électronique C mettant en oeuvre un algorithme cryptographique A à clé secrète k[0] de taille k pour calculer un message chiffré à partir d'un message d'entrée. Selon l'invention, on forme une clé de session k[i] à partir de la clé de session précédente k [i-1] tout en fournissant au terminal T l'indice i de manière non confidentielle. Possédant k[0] et i, le terminal T pourra calculer k[i] sans avoir à calculer toutes les clés intermédiaires k [1], k[2], ... , k [i-1] .

La mise en oeuvre du procédé de contre mesure est caractérisée par une évolution de K[i] entre les utilisations successives de A, i étant le nombre d'exécutions de l'algorithme A, à partir de la règle :

$$K[i]=f(K[i-1]),$$

f étant une fonction prenant en entrée une clé et renvoyant en sortie une clé.

Dans un mode de réalisation , on forme la clé k[i] en élevant la clé k[i-1] au carré modulo un nombre premier ayant pour taille celle de la clé.

La fonction f(x), x étant une variable , est telle que :

$$f(x) = x^2 \bmod z,$$

dans laquelle z est une constante tel que le raccourci de calcul utilisé par T est formulé par $K[i]=K[0]^{(2^i)} \bmod z$, dans laquelle la quantité $2^i$ est calculée modulo phi(z). On notera qu'une autre puissance entière (nombre e) que deux peut être utilisée dans le procédé inventif, par exemple, il est également possible de définir:

$$f(x) = x^3 \bmod z$$

Le raccourci de calcul correspondant étant alors $K[i] =K[0]^{(3^i)} \bmod z$. Où la quantité $3^i$ est calculée modulo phi (z).

Dans un autre mode de réalisation, on forme la clé k [i] en multipliant la clé k [i-1] par une constante c modulo un nombre premier ayant pour taille celle de la clé.

La fonction f(x), x étant une variable, est telle que :

$$f(x) = x*c \bmod z,$$

dans laquelle z et c sont des constantes tel que le raccourci de calcul utilisé par T est $K[i]=K[0]*c^i \bmod z$.

Préférentiellement, z est le plus grand nombre premier inférieur à $2^k$.

Selon un autre mode opératoire de l'invention, cette dernière concerne aussi un procédé de contre-mesure dans un premier composant électronique (C) communiquant avec un second composant électronique (T) et mettant en oeuvre un algorithme cryptographique B utilisant le procédé décrit ci-dessus où la clé secrète consiste en une série d'octets auxquels on applique le procédé inventif modulo un petit nombre premier , la clé K[i-1] étant constituée d'une série de L octets , la mise en œuvre du procédé de contre-mesure de K [i-1] entre les utilisations successives de B[i-1] étant le nombre d'exécutions de l'algorithme B à partir de la règle :

$$K[i-1]=\{B[1, i-1], \ldots, B[L, i-1]\},$$

Ladite règle étant transformée en K[i] en subissant la transformation pour t allant de 1 à L :

$B [t, i]=B[t, i-1]^2 \bmod U$ où U est un nombre premier d'un octet , par exemple 251,

La clé K[i] étant calculée en utilisant le raccourci de calcul pour t allant de 1 à L :

$B [t, i]=B[t, i-1]^{(2^i)} \bmod U$ dans laquelle formulation la quantité $2^i$ est calculée modulo phi(U).

Préférentiellement, ce dernier mode opératoire concerne un procédé de contre-mesure où la clé K[i-1] consiste en une série d'octets auxquels on applique le procédé inventif modulo un petit nombre premier caractérisée en ce que la clé K[i-1] est constituée d'une série de L octets :

$$K[i-1]=\{B[1, i-1], \ldots, B[L, i-1]\},$$

Et est ensuite transformée en K[i] en subissant la transformation pour t allant de 1 à L :

$B [t, i] =B [t, i-1]*c[t] \bmod U$ où U est un nombre premier d'un octet, par exemple 251,

la clé K[i] étant alors calculée en utilisant le raccourci de calcul pour t allant de 1 à L :

$$B[t, i]=B[t, i-1]*c[t]\hat{}i \bmod U.$$

Plus préférentiellement encore pour ce mode opératoire particulier où le terminal et la carte effectuent le calcul de la clé de session K[i] sur plus que le nombre d'octets nécessaires à l'algorithme de chiffrement à clé secrète dans lequel cette clé devrait servir puis hachent la clé résultante afin d'obtenir le nombre d'octets nécessaires à l'algorithme de chiffrement à clé secrète. Ceci afin de compenser la perte d'entropie résultant de l'usage de modules U plus petits que le nombre 256.

Préférentiellement, le nombre U est d'un, deux, trois, quatre, cinq ou six octets.

Bien sûr, l'invention concerne aussi une carte à puce et un Terminal électronique pour ce dernier mode opératoire particulier.

D'autres caractéristiques et avantages de l'invention sont détaillés dans la description suivante faite à titre indicatif et nullement limitatif et en référence aux dessins annexés, dans lesquels :

- les figures 1 et 2 déjà décrites représentent le signal DPA(t) que l'on peut obtenir en fonction d'une hypothèse sur une sous-clé de la clé secrète K selon une attaque DPA ;
- les figures 3 et 4 sont des organigrammes représentant les premiers tours et les derniers tours de l'algorithme DES ;
- la figure 5 est un schéma bloc de l'opération SBOX utilisée dans l'algorithme DES ;
- la figure 6 montre un exemple de table de constante élémentaire à une entrée et une sortie utilisée dans l'opération SBOX ;
- la figure 7 représente un premier exemple d'organigramme d'exécution du DES avec un procédé de contre-mesure selon l'invention ;
- la figure 8 représente un deuxième exemple d'organigramme d'exécution du DES avec un procédé de contre mesure selon l'invention.

La contre mesure de la présente invention n'est pas spécifique au DES, bien qu'il soit choisi la description ci-dessous, et peut s'appliquer également à d'autres algorithmes à clé secrète (tels que DES, IDEA, AES, FEAL, triple DES, BlowFish, SAFER, SHA-MAC; RIPEMD, DFC, RC5, RC6 ou SEAL) ; dans la suite de notre exposé, il sera considéré donc le cas général d'un algorithme A(M, K) (initialement vulnérable à la DPA) où K est une clé de taille k, M le message.

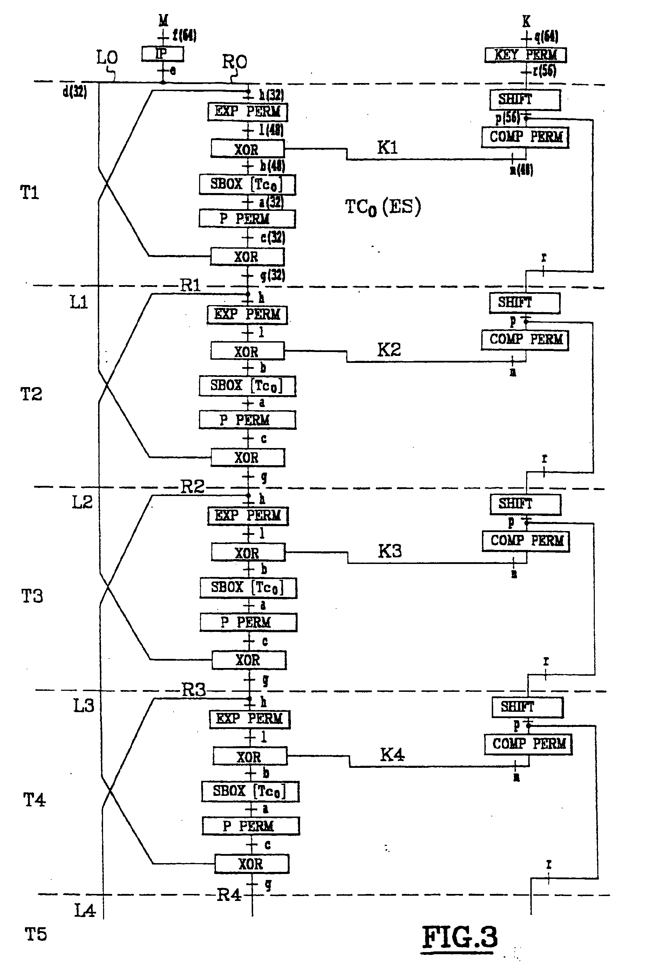

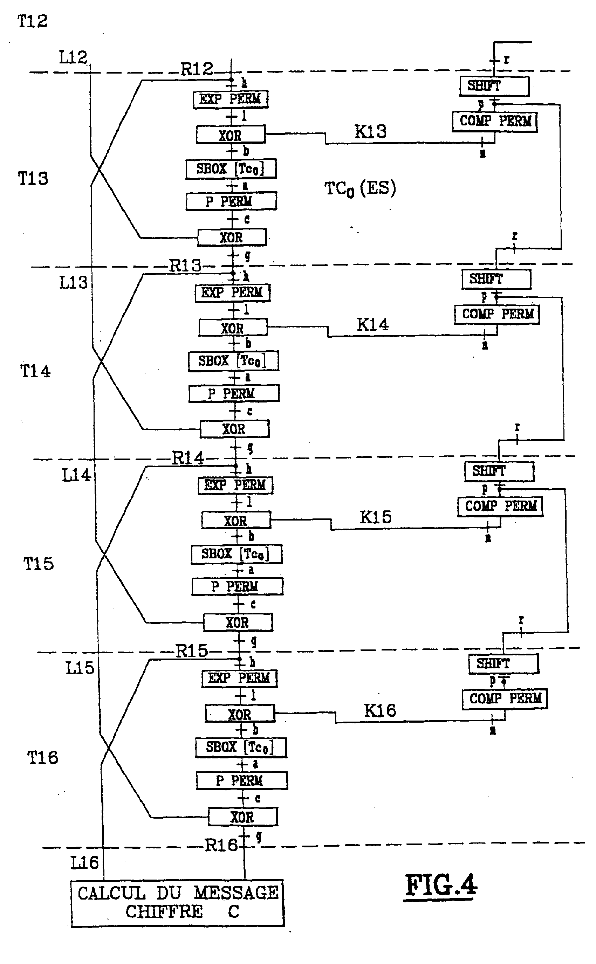

L'algorithme cryptographique à clé secrète DES (dans la suite on désigne plus simplement DES pour l'algorithme DES) comporte 16 tours de calcul, notés T1 à T16, comme représenté sur les figures 3 et 4.

Le DES débute par une permutation initiale IP sur le message d'entrée M (figure 3). Le message d'entrée M est un mot f de 64 bits. Après permutation, on obtient un mot e de 64 bits, que l'on coupe en deux pour former les paramètres d'entrée L0 et R0 du premier tour (T1). L0 est un mot d de 32 bits contenant les 32 bits de poids forts du mot e. R0 est un mot h de 32 bits contenant les 32 bits de poids faibles du mot e.

La clé secrète K, qui est un mot q de 64 bits subit elle-même une permutation et une compression pour fournir un mot r de 56 bits.

Le premier tour comprend une opération EXP PERM sur le paramètre R0, consistant en une expansion et une permutation, pour fournir en sortie un mot 1 de 48 bits.

Ce mot 1 est combiné à un paramètre K1, dans une opération de type OU EXCLUSIF notée XOR, pour fournir un mot b de 48 bits. Le paramètre K1 qui est un mot m de 48 bits est obtenu du mot r par un décalage d'une position (opération notée SHIFT sur les figures 3 et 4) suivi d'une permutation et d'une compression (opération notée COMP PERM).

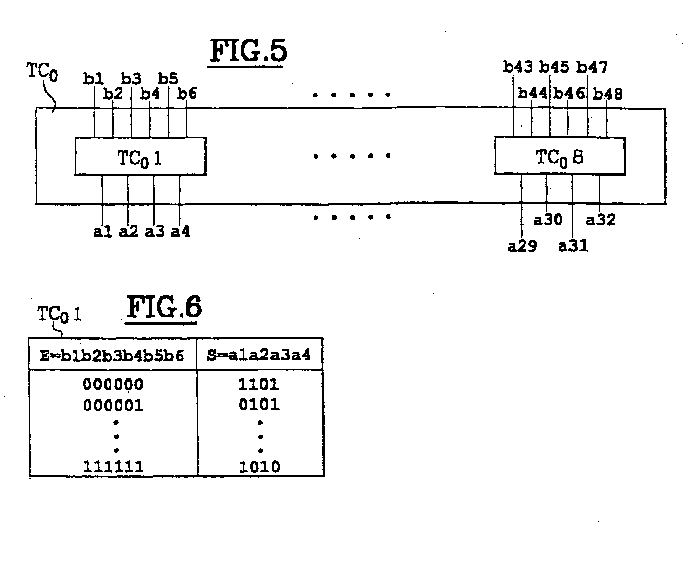

Le mot b est appliqué à une opération notée SBOX, en sortie de laquelle on obtient un mot a de 32 bits. Cette opération particulière sera expliquée plus en détail en relation avec les figures 5 et 6.

Le mot a subit une permutation P PERM, donnant en sortie le mot c de 32 bits.

Ce mot c est combiné au paramètre d'entrée L0 du premier tour T1, dans une opération logique de type OU EXCLUSIF, notée XOR, qui fournit en sortie le mot g de 32 bits.

Le mot h (=R0) du premier tour fournit le paramètre d'entrée L1 du tour suivant (T2) et le mot g du premier tour fournit le paramètre d'entrée R1 du tour suivant. Le mot p du premier tour fournit l'entrée r du tour suivant.

Les autres tours T2 à T16 se déroulent de façon similaire, excepté en ce qui concerne l'opération de décalage SHIFT qui se fait sur une ou deux positions selon les tours considérés.

Chaque tour Ti reçoit ainsi en entrée les paramètres Li-1, Ri-1 et r et fournit en sortie les paramètres Li et Ri et r pour le tour suivant Ti+1.

En fin d'algorithme DES (figure 4), le message chiffré est calculé à partir des paramètres L16 et R16 fournis par le dernier tour T16.

Ce calcul du message chiffré C comprend en pratique les opérations suivantes :

- formation d'un mot e' de 64 bits en inversant la position des mots L16 et R16, puis en les concaténant ;
- application de la permutation IP-1 inverse de celle de début de DES, pour obtenir le mot f' de 64 bits formant le message chiffré C.

L'opération SBOX est détaillée sur les figures 5 et 6. Elle comprend une table de constantes $TC_0$ pour fournir une donnée de sortie a en fonction d'une donnée d'entrée b.

En pratique, cette table de constantes $TC_0$ se présente sous la forme de huit tables de constantes élémentaires $TC_0 1$ à $TC_0 8$, chacune recevant en entrée seulement 6 bits du mot b, pour fournir en sortie seulement 4 bits du mot a.

Ainsi, la table de constantes élémentaires $TC_0 1$ représentée sur la figure 6 reçoit comme donnée d'entrée, les bits b1 à b6 du mot b et fournit comme donnée de sortie les bits al à a4 du mot a.

En pratique ces huit tables de constantes élémentaires $TC_0 1$ à $TC_0 8$ sont mémorisées en mémoire programme du composant électronique.

Dans l'opération SBOX du premier tour T1, un bit particulier de la donnée a de sortie de la table de constantes $TC_0$ dépend de seulement 6 bits de la donnée b appliquée en entrée, c'est à dire de seulement 6 bits de la clé secrète K et du message d'entrée (M).

Dans l'opération SBOX du dernier tour T16, un bit particulier de la donnée a de sortie de la table de constantes $TC_0$ peut être recalculé à partir de seulement 6 bits de la clé secrète K et du message chiffré (C).

Or si on reprend le principe de l'attaque DPA, si on choisit comme bit cible un bit de la donnée de sortie a, il suffit de faire une hypothèse sur 6 bits de la clé K, pour prédire la valeur d'un bit cible pour un message d'entrée (M) ou de sortie (C) donné. En d'autres termes , pour le DES , il suffit de faire une hypothèse sur une sous-clé de 6 bits.

Dans une attaque DPA sur un tel algorithme pour un bit cible donné, on a donc à discriminer une hypothèse de sous-clé juste parmi 64 possibles.

Ainsi, en prenant seulement huit bits du mot a comme bits cibles, (un bit de sortie par table de constantes élémentaires $TC_0 1$ à $TC_0 8$), on peut découvrir jusqu'à 6x8=48 bits de la clé secrète, en faisant des attaques DPA sur chacun de ces bits cibles.

Dans le DES, on trouve donc des instructions critiques au sens des attaques DPA au début de l'algorithme et à la fin.

Au début de l'algorithme DES, les données qui peuvent être prédites à partir d'un message d'entrée M et d'une hypothèse de sous-clé, sont les données a et g calculées dans le premier tour (T1).

La donnée a du premier tour T1 (figure 3) est la donnée de sortie de l'opération SBOX du tour considéré. La donnée g est calculée à partir de la donnée a, par permutation (P PERM) et opération OU EXCLUSIF avec le paramètre d'entrée L0.

En fait, la donnée c du premier tour, est une donnée dérivée de la donnée a du premier tour. La donnée dérivée c correspond à une simple permutation de bits de la donnée a.

La donnée 1 du deuxième tour est une donnée dérivée de la donnée g du premier tour, car elle correspond à une permutation des bits du mot g, certains bits du mot g étant en outre dupliqués.

Connaissant a et g, on peut aussi connaître ces données dérivées.

Les instructions critiques du début de l'algorithme sont les instructions critiques qui manipulent soit la donnée que l'on peut prédire, comme la donnée a du premier tour, soit une donnée dérivée.

Les instructions critiques manipulant la donnée a du premier tour T1 ou la donnée dérivée c sont ainsi les instructions de fin de l'opération SBOX, de l'opération P PERM et de début de l'opération XOR du premier tour T1.

Les instructions critiques manipulant la donnée g ou des données dérivées sont toutes les instructions de fin d'opération XOR de fin du premier tour T1 jusqu'aux instructions de début d'opération SBOX du deuxième tour T2 , et de début de l'opération XOR en fin du troisième tour T3 (L2 = h(T2) = g (T1) ) .

En fin d'algorithme DES, les données qui peuvent être prédites à partir d'un message chiffré C et d'une hypothèse de sous-clé , sont la donnée a du seizième tour T16 et la donnée L15 égale au mot h du quatorzième tour T14.

Les instructions critiques manipulant la donnée a du seizième tour ou des données dérivées sont les instructions du seizième tour de fin d'opération SBOX, de l'opération de permutation P PERM et de début d'opération XOR.

Pour la donnée L15, les instructions critiques manipulant cette donnée ou des données dérivées sont toutes les instructions depuis les instructions de fin d'opération XOR du quatorzième tour T14, jusqu'aux instructions de début d'opération SBOX du quinzième tour T15, plus les instructions de début d'opération XOR du seizième tour T16.

Le procédé de contre-mesure selon l'invention appliqué à cet algorithme DES consiste à avoir, pour chaque instruction critique, autant de chances que l'instruction critique manipule une donnée que son complément. Ainsi, quel que soit le bit cible sur lequel l'attaque DPA peut être faite, on a autant de chances que les instructions critiques, qui manipulent ce bit, manipulent un "1" ou un "0".

En pratique, ceci doit être vrai pour chacun des bits cibles potentiels : en d'autres termes, l'attaquant ayant le choix entre plusieurs attaques possibles, c'est à dire entre plusieurs fonctions de sélection booléenne possibles pour effectuer son tri de courbes, pour une hypothèse de sous-clé donnée, la mise en oeuvre du procédé de contre-mesure selon l'invention doit s'attacher à ce que les données manipulées par chacune des instructions critiques, prennent aléatoirement, une fois sur deux, une valeur ou son complément. En ce qui concerne l'application du procédé de contre-mesure selon l'invention à l'algorithme DES, il faut donc appliquer la contre-mesure aux instructions critiques de début de DES et aux instructions critiques de fin de DES, pour être totalement protégé.

Dans le DES, toutes les données manipulées par des instructions critiques sont une donnée de sortie ou des données dérivées d'une donnée de sortie d'une opération SBOX.

En effet, en début de DES, les données qui peuvent être prédites sont les données a et g du premier tour T1. La donnée a est la donnée de sortie de l'opération SBOX du premier tour. La donnée g est calculée à partir de la donnée a, puisque g = P PERM(a) XOR L0. g est donc une donnée dérivée de la donnée de sortie a de l'opération SBOX du premier tour. Ainsi , toutes les données manipulées par les instructions critiques de début de DES découlent directement ou indirectement de la donnée de sortie a de l'opération SBOX du premier tour.

En ce qui concerne la fin de DES, les données qui peuvent être prédites sont la donnée a du seizième tour T16 et la donnée g du quatorzième tour T14, g étant égale à L15.

La donnée a est la donnée de sortie de l'opération SBOX du seizième tour T16.

Quant à la donnée L15, elle se calcule, dans l'exécution normale de l'algorithme DES, à partir de la donnée de sortie a de l'opération SBOX du quatorzième tour T14 : L15 = P PERM(a) XOR L14.

Si on rend imprédictibles les données de sortie a de ces opérations SBOX particulières, on rend aussi imprédictibles toutes les données dérivées : on rend donc imprédictibles toutes les données manipulées par les instructions critiques de l'algorithme DES. Si on considère que ces opérations SBOX constituent des premiers moyens pour fournir une donnée de sortie S=a à partir d'une donnée d'entrée E=b, le procédé de contre-mesure appliqué à l'algorithme DES consiste à utiliser d'autres moyens pour rendre imprédictibles la donnée de sortie, en sorte que cette donnée de sortie et/ou des données dérivées manipulées par les instructions critiques soient toutes imprédictibles.

Selon l'invention, on forme un groupe formé des trois premiers tours au moins et un autre groupe formé des trois derniers tours au moins. Ces groupes contiennent donc tous les tours comprenant des instructions critiques.

On associe à ces deux groupes une première séquence utilisant les premiers moyens pour tous les tours et une deuxième séquence utilisant les autres moyens pour certains tours au moins.

Dans les autres tours qui ne sont pas dans ces groupes, on peut continuer à utiliser les premiers moyens.

L'utilisation de ces autres moyens est telle que le résultat en sortie, c'est à dire, le message chiffré reste juste.

Ces autres moyens peuvent comprendre plusieurs moyens différents. Ils sont tels qu'à l'une et/ou l'autre donnée parmi les données d'entrée et de sortie de premiers moyens, ils font correspondre la donnée complémentée.

Ainsi, considérant un grand nombre d'exécution, les groupes utiliseront en moyenne une fois sur deux la première séquence, qui est la séquence normale de l'algorithme, et une fois sur deux l'autre séquence. Les données manipulées par les instructions critiques dans ces groupes, correspondant à certains résultats intermédiaires, seront donc en moyenne complémentées une fois sur deux. Sur un grand nombre de courbes on aura donc statistiquement autant de chances qu'un bit cible donné soit à 1 ou à 0.

Selon la figure 7, qui représente un premier exemple d'organigramme d'exécution du DES avec un procédé de contre-mesure selon l'invention, la communication entre les composant T (Terminal) et C (Carte) est gouvernée par l'échange des signaux suivant les étapes 1 à 6 décrites ci-dessous :

1. C incrémente i dans sa mémoire non-volatile (par exemple EEPROM) ;
2. C génère la clé de session $K[i] = K[i-1]^2 \bmod z$;
3. C efface la clé $K[i-1]$ de sa mémoire non-volatile (par exemple EEPROM) et inscrit à sa place K [i] ;
4. C communique i à T ;
5. T calcule $K[i] = K[0]^{(2^i)} \bmod z$ où la quantité $2^i$ est calculée modulo phi(z).
6. C et T initient un calcul cryptographique mettant en oeuvre K[i] ;

Alternativement, selon la figure 8, qui représente un deuxième exemple d'organigramme d'exécution du DES avec un procédé de contre mesure selon l'invention, la communication entre C et T est gouvernée par l'échange de signaux suivant les étapes 1 à 6 décrites ci-dessous:

1. C incrémente i dans sa mémoire non-volatile (par exemple EEPROM).
2. C génère la clé de session $K[i] = K[i-1]*c \bmod z$
3. C efface la clé $K[i-1]$ de sa mémoire non-volatile (par exemple EEPROM) et inscrit à sa place K[i].
4. C communique i à T.
5. T calcule $K[i] = K[0]*(c^i) \bmod z$
6. C et T initient un calcul cryptographique mettant en oeuvre K[i].

Le choix optimal pour le nombre z est le plus petit nombre premier de taille k. En particulier :

EP 1 180 260 B1

| k = taille de K en bits | valeur de z |
|---|---|
| 56 | 2^k - 5 |
| 64 | 2^k - 59 |
| 80 | 2^k - 65 |
| 96 | 2^k - 17 |
| 128 | 2^k - 159 |
| 256 | 2^k - 189 |

**Revendications**

1. Procédé de contre-mesure pour un premier composant électronique (C) communiquant avec un second composant électronique (T) et mettant en oeuvre un algorithme cryptographique A à clé secrète K de taille k bits, la mise en oeuvre du procédé de contre-mesure comprenant une évolution de la valeur K[i] de ladite clé lors des utilisations successives de l'algorithme A, i étant le nombre d'exécutions de l'algorithme A,
**caractérisé en ce que**

- le premier composant électronique (C)

- calcule la valeur K[i] de la clé à partir de la précédente valeur K[i-1] de ladite clé au moyen d'une fonction f telle que K[i]=f(K[i-1]),
- transmet le nombre i au second composant électronique (T),

**et en ce que**
- le second composant électronique (T) possède un raccourci de calcul pour calculer la valeur K[i] de la clé secrète à partir de K[0] sans avoir à générer les i-1 valeur de clés séparant K[0] et K[i].

2. Procédé selon la revendication 1 **caractérisé en ce que** la fonction f mise en oeuvre par le premier composant (C) consiste à élever à une puissance entière P la valeur K[i-1] de la clé modulo un nombre premier z ayant une taille égale à celle de la clé, ledit nombre z étant une constante telle que le raccourci de calcul utilisé par le second composant électronique (T) consiste en K[i]=K[0]^(P^i) mod z, la valeur P^i étant calculée modulo phi(z).

3. Procédé selon la revendication 1 **caractérisé en ce que** la fonction f mise en oeuvre par le premier composant (C) consiste à élever au carré la valeur K[i-1] de la clé modulo un nombre premier z ayant une taille égale à celle de la clé, ledit nombre z étant une constante telle que le raccourci de calcul utilisé par le second composant électronique (T) consiste en K[i]=K[0]^(2^i) mod z, la valeur 2^i étant calculée modulo phi(z).

4. Procédé selon la revendication 1 **caractérisé en ce que** la fonction f mise en oeuvre par le premier composant (C) consiste à multiplier la valeur K[i-1] de la clé par une constante c modulo un nombre premier z ayant une taille égale à celle de la clé, lesdits nombres c et z étant des constantes telles que le raccourci de calcul utilisé par le second composant électronique (T) consiste en K[i]=K[0]*c^i mod z.

5. Procédé selon l'une quelconque des revendications 2 à 4 **caractérisé en ce que** z est le plus grand nombre premier inférieur à 2^k.

6. Composant électronique (T) apte à communiquer avec un second composant électronique (C) au moyen d'un algorithme cryptographique A à clé secrète K, la valeur K[i] de ladite clé K évolue lors des utilisations successives de l'algorithme A à partir de la précédente valeur K[i-1] de ladite clé au moyen d'une fonction f telle que K[i]=f(K[i-1]),i étant le nombre d'exécutions de l'algorithme A,
**caractérisé en ce que**
le composant électronique (T) comporte un moyen pour réaliser un raccourci de calcul pour calculer la valeur K [i] de la clé secrète à partir de K [0] sans avoir à générer les i-1 valeur de clés séparant K[0] et K[i],
la valeur de i étant transmise par ledit second composant électronique (C).

9

**Claims**

1. A countermeasure method for a first electronic component (C) communicating with a second electronic component (T) and implementing a cryptographic algorithm A having a secret key K of size k bits, the implementation of the countermeasure method comprising varying the value K[i] of said key on successive occasions on which the algorithm A is used, where i is the number of executions of the algorithm A;
   **said countermeasure method being characterized in that**:

   - the first electronic component (C):

      - computes the value K[i] of the key on the basis of the preceding value K[i-1] of said key by means of a function f such that K[i]=f (K[i-1]); and
      - transmits the number i to the second electronic component (T);

   **and in that:**

      - the second electronic component (T) has a computation shortcut for computing the value K[i] of the secret key on the basis of K[0] without having to generate the i-1 key values separating K[0] and K[i].

2. A method according to claim 1, **characterized in that** the function f implemented by the first component (C) consists in raising to an integer power P the value K[i-1] of the key modulo a prime number z having a size equal to the size of the key, said number z being a constant such that the computation shortcut used by the second electronic component (T) consists in $K[i]=K[0]^{\wedge}(P^{\wedge}i)$ modulo z, the value $P^{\wedge}i$ being computed modulo phi (z).

3. A method according to claim 1, **characterized in that** the function f implemented by the first component (C) consists in squaring the value K[i-1] of the key modulo a prime number z having a size equal to the size of the key, said number z being a constant such that the computation shortcut used by the second electronic component (T) consists in $K[i]=K[0]^{\wedge}(2^{\wedge}i)$ modulo z, the value $2^{\wedge}i$ being computed modulo phi (z).

4. A method according to claim 1, **characterized in that** the function f implemented by the component (C) consists in multiplying the value K [i-1] of the key by a constant c modulo a prime number z having a size equal to the size of the key, said numbers c and z being constants such that the computation shortcut used by the second electronic component (T) consists in $K[i]=K[0]*c^{\wedge}i$ modulo z.

5. A method according to any one of claims 2 to 4, **characterized in that** z is the highest prime number less than $2^{\wedge}k$.

6. An electronic component (T) suitable for communicating with a second electronic component (C) by means of a cryptographic algorithm A having a secret key K, the value K[i] of said key K varying on successive occasions on which the algorithm A is used from the preceding value K[i] of said key by means of a function f such that K[i]=f(K [i-1]), where i is the number of executions of the algorithm A;
   **said electronic component (T) being characterized in that**
   it has means for forming a computation shortcut for computing the value K[i] of the secret key on the basis of K[0] without having to generate the i-1 key values separating K[0] and K[i];
   the value of i being transmitted by said second electronic component (C).

**Patentansprüche**

1. Verfahren der Gegenmaßnahme für ein erstes elektronisches Bauelement (C), das mit einem zweiten elektronischen Bauelement (T) kommuniziert und einen Geheimschrift-Algorithmus A mit Geheimschlüssel K von der Größe k Bits einsetzt, wobei der Einsatz des Verfahrens der Gegenmaßnahme eine Fortentwicklung des Werts K[i] des besagten Schlüssels bei aufeinanderfolgenden Benutzungen des Algorithmus A umfaßt, wobei i die Anzahl Ausführungen des Algorithmus A ist,
   **dadurch gekennzeichnet, daß**

   - das erste elektronische Bauelement (C)
   - den Wert K[i] des Schlüssels ab dem vorhergehenden Wert K[i-1] des besagten Schlüssels vermittels einer Funktion f berechnet, wie K[i] = f(K[i-1]),

- die Anzahl i an das zweite elektronische Bauelement (T) übermittelt,

und dadurch, daß

- das zweite elektronische Bauelement (T) eine Berechnungsabkürzung für die Berechnung des Wertes K[i] des Geheimschlüssels ab K[0] besitzt, ohne die i-1 Werte von Schlüsseln generieren zu müssen, die K[0] und K[i] trennen.

2. Verfahren nach Anspruch 1, **dadurch gekennzeichnet, daß** die vom ersten Bauelement (C) eingesetzte Funktion f darin besteht, den Wert K[i-1] des Schlüssels auf eine ganzen Wert hoch P zu setzen modulo einer Primzahl z, die eine Größe gleich derjenigen des Schlüssels hat, wobei die besagte Zahl z eine solche Konstante ist, daß die vom zweiten elektronischen Bauelement (T) benutzte Berechnungsabkürzung aus $K[i] = K[0]^{\wedge}(P^{\wedge}i)$ mod z besteht, wobei der Wert $P^{\wedge}i$ modulo phi(z) berechnet wird.

3. Verfahren nach Anspruch 1, **dadurch gekennzeichnet, daß** die vom ersten Bauelement (C) eingesetzte Funktion f darin besteht, den Wert K[i-1] des Schlüssels ins Quadrat zu setzen modulo einer Primzahl z, die eine Größe gleich derjenigen des Schlüssels hat, wobei die besagte Zahl z eine solche Konstante ist, daß die vom zweiten elektronischen Bauelement (T) benutzte Berechnungsabkürzung aus $K[i] = K[0]^{\wedge}(2^{\wedge}i)$ mod z besteht, wobei der Wert $2^{\wedge}i$ modulo phi(z) berechnet wird.

4. Verfahren nach Anspruch 1, **dadurch gekennzeichnet, daß** die vom ersten Bauelement (C) eingesetzte Funktion f darin besteht, den Wert K[i-1] des Schlüssels mit einer Konstanten zu multiplizieren modulo einer Primzahl z, die eine Größe gleich derjenigen des Schlüssels hat, wobei die besagten Zahlen c und z solche Konstanten sind, daß die vom zweiten elektronischen Bauelement (T) benutzte Berechnungsabkürzung aus $K[i] = K[0]^*c^{\wedge}i$ mod z besteht.

5. Verfahren nach einem beliebigen der Ansprüche 2 bis 4, **dadurch gekennzeichnet, daß** z die größte Primzahl unter $2^{\wedge}k$ ist.

6. Elektronisches Bauelement (T), fähig zur Kommunikation mit einem zweiten elektronischen Bauelement (C) vermittels eines Geheimschrift-Algorithmus A mit Geheimschlüssel K, wobei der Wert K[i] des besagten Schlüssels K sich bei dne aufeinanderfolgenden Benutzungen des Algorithmus A ab dme vorherigen Wert K[i-1] des besagten Schlüssels fortentwickelt vermittels einer Funktion f wie K[i] = f(K[i-1]), wobei i die Anzahl der Ausführungen des Algorithmus A ist,
**dadurch gekennzeichnet, daß**
das elektronische Bauelement (T) ein Mittel enthält, um eine Berechnungsabkürzung zu realisieren für die Berechnung des Wertes K[i] des Geheimschlüssels AB k[0], ohne die i-1 Schlüsselwerte generieren zu müssen, die K[0] und K[i] trennen,
wobei der Wert i vom besagten zweiten elektronischen Bauelement (C) übertragen wird.

## FIG.1

$DPA(t)$

$TC_1$  $TC_2$  $TC_3$  $TC_4$  $TC_5$  $TC_6$  $t$

EP 1 180 260 B1

## FIG.2

DPA(t)

t

**FIG.3**

T12

L12 ————————— R12 —————— h

EXP PERM

l

XOR ————————— K13

b

SBOX [Tc₀]              TC₀ (ES)

a

P PERM

c

XOR

g

T13

SHIFT

p

COMP PERM

a

r

L13 ————————— R13 —————— h

EXP PERM

l

XOR ————————— K14

b

SBOX [Tc₀]

a

P PERM

c

XOR

g

T14

SHIFT

p

COMP PERM

a

r

L14 ————————— R14 —————— h

EXP PERM

l

XOR ————————— K15

b

SBOX [Tc₀]

a

P PERM

c

XOR

g

T15

SHIFT

p

COMP PERM

a

r

L15 ————————— R15 —————— h

EXP PERM

l

XOR ————————— K16

b

SBOX [Tc₀]

a

P PERM

c

XOR

g

T16

SHIFT

p

COMP PERM

a

r

L16 ————————— R16 —————— g

CALCUL DU MESSAGE
CHIFFRE   C

**FIG.4**

## FIG.5

TC$_0$

b1  b3  b5
b2  b4  b6

• • • • •

b43 b45 b47
b44 b46 b48

| TC$_0$ 1 |

• • • • •

| TC$_0$ 8 |

a1 a2 a3 a4

• • • • •

a30    a32

a29    a31

## FIG.6

TC$_0$ 1

| E=b1b2b3b4b5b6 | S=a1a2a3a4 |
|---|---|
| 000000 | 1101 |
| 000001 | 0101 |
| • | • |
| • | • |
| 111111 | 1010 |

# FIGURE 7

<table>
<tr><td>

**Appareil C**

Incrémenter i en EEPROM
Calculer K[i]=K[i-1]^2 mod z
Effacer K[i-1] de l'EEPROM
Ecrire K[i] en EEPROM
Envoyer i

</td><td>

**Appareil T**

Recevoir i
Calculer $K[i]=K[0]^{(2^i)} \bmod z$

</td></tr>
</table>

i →

← Protocole entre T et C utilisant K[i] →

EP 1 180 260 B1

**FIGURE 8**

Appareil C

Incrémenter i en EEPROM
Calculer K[i]=K[i-1]*c mod z
Effacer K[i-1] de l'EEPROM
Ecrire K[i] en EEPROM
Envoyer i

$i$

Appareil T

Recevoir i
Calculer $K[i]=K[0]*(c^i)$ mod z

Protocole entre T et C
utilisant K[i]